# FASCICULE DE BREVET EUROPEEN

(11) **EP 2 634 884 B1**
(45) Date de publication et mention de la délivrance du brevet: **08.06.2016**
(21) Numéro de dépôt: 13157305.7
(22) Date de dépôt: 28.02.2013
(51) Int. Cl.: H02H 7/08, H02H 3/02, B60L 3/00, B60L 3/04, B60L 11/18, B60L 15/00, H02H 7/06, H02H 9/04

(54) **Chaîne d'alimentation d'une machine électrique synchrone, système de traction électrique comprenant une telle chaîne, et procédé de commande d'une telle chaîne**
Einspeisungskette einer synchronen elektrischen Maschine, elektrisches Antriebssystem, das eine solche Kette umfasst, und Steuerverfahren einer solchen Kette
Supply chain of a synchronous electric machine, electric traction system including such a chain and method for controlling such a chain

(30) Priorité: 02.03.2012 FR 1251937
(43) Date de publication de la demande: 04.09.2013
(73) Titulaire: ALSTOM Transport Technologies, 92300 Levallois-Perret (FR)
(72) Inventeur: Cypers, David, 65310 Odos (FR); Giacomoni, Olivier, 20159 Milano (IT); Belin, Sébastien, 64420 Espouey (FR); Desportes, Guillaume, 65700 Maubourguet (FR)
(74) Mandataire: Blot, Philippe Robert Emile

(56) Documents cités:
- EP-A1- 1 544 974
- CN-Y- 2 128 627
- FR-A1- 2 906 194
- JP-A- 2007 189 763
- US-A- 4 054 943
- US-A1- 2011 316 460

## Description

La présente invention concerne une chaîne d'alimentation ayant M sorties d'alimentation pour l'alimentation d'une machine électrique synchrone à M phases, la chaîne comprenant :
- un convertisseur d'un courant continu d'entrée en un courant alternatif polyphasé de sortie comportant une pluralité M de phases, le convertisseur comprenant deux bornes d'entrée et M bornes de sortie, et étant propre à délivrer à ladite machine électrique le courant alternatif polyphasé,
- une banque de stockage comportant au moins un condensateur de stockage disposé entre les bornes d'entrée du convertisseur,
- des moyens de détection d'un court-circuit externe à la machine électrique,
- un dispositif d'isolement de la machine électrique contre les surtensions et/ou les surintensités dudit courant alternatif polyphasé, le dispositif d'isolement étant disposé entre le convertisseur et les M sorties d'alimentation, et comportant une pluralité M de branches, chaque branche comportant au moins un interrupteur électrique de sectionnement de la phase considérée, disposé entre le convertisseur et l'une des M sorties, et
- des moyens de commande du convertisseur et du dispositif d'isolement.

La présente invention concerne également un système de traction électrique comprenant une machine électrique synchrone et une telle chaîne d'alimentation de la machine.

L'invention concerne également un procédé de commande d'une telle chaîne d'alimentation d'une machine électrique synchrone.

En particulier, l'invention s'applique aux trains à grande vitesse équipés d'un moteur électrique synchrone à aimants permanents et d'une chaîne d'alimentation du moteur électrique.

On connaît une chaîne d'alimentation du type précité. Lors de l'apparition d'un court-circuit interne ou externe à la machine électrique, une surtension ou une surintensité du courant d'alimentation est détectée. Si le court-circuit est externe à la machine électrique, une des solutions couramment adoptée consiste à commander, via les moyens de commande, l'ouverture des interrupteurs du dispositif d'isolement. Cette solution permet d'isoler la machine électrique de la chaîne d'alimentation et de la protéger ainsi contre la surtension ou la surintensité détectée.

On connaît par ailleurs, par exemple des documents EP 1 544 974 A1 et CN 2 128 627, une chaîne d'alimentation comprenant également un organe de mise en court-circuit disposé entre l'onduleur et les trois phase de la machine électrique et propre à relier entre elles les trois phases.

Cependant, si le court-circuit est interne à la machine électrique, des couples pulsatoires importants ainsi que des courants de court-circuit sont engendrés au sein de la machine électrique. L'ouverture du dispositif d'isolement ne suffit alors pas à réduire suffisamment l'amplitude de ces couples pulsatoires et de ces courants. La machine électrique est en effet entraînée par les roues du train dans lequel elle est installée, fonctionnant ainsi en régime « alternateur ». Les couples pulsatoires ainsi que les courants de court-circuit engendrés risquent alors de conduire à des phénomènes indésirables, tels que par exemple un blocage d'essieux.

Un des buts de l'invention est donc de proposer une chaîne d'alimentation d'une machine électrique permettant de réduire l'amplitude des couples pulsatoires et des courants de court-circuit engendrés au sein de la machine électrique, lors de l'apparition d'un court-circuit interne à la machine électrique.

A cet effet, l'invention a pour objet une chaîne d'alimentation, un système de traction électrique comprenant une machine électrique synchrone et une chaîne d'alimentation de la machine, et un procédé de commande d'une chaîne d'alimentation conformes aux revendications.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système de traction selon l'invention, relié à une source de tension continue, comprenant une chaîne d'alimentation selon un premier mode de réalisation et une machine électrique synchrone,
- la figure 2 est un schéma électrique de la chaîne d'alimentation de la figure 1, lors de l'alimentation en courant de la machine électrique de la figure 1,
- la figure 3 est une représentation schématique de la chaîne d'alimentation de la figure 1, lors d'une étape d'isolement électrique entre la machine électrique et la chaîne d'alimentation,
- la figure 4 est une vue analogue à celle de la figure 3, lors d'une étape de mise en court-circuit des sorties d'alimentation de la chaîne d'alimentation,
- la figure 5 est un organigramme représentant un procédé de commande d'une chaîne d'alimentation selon l'invention,
- la figure 6 est une représentation schématique de la chaîne d'alimentation de la figure 1 selon une variante de réalisation de l'invention, et
- la figure 7 est un schéma électrique d'une chaîne d'alimentation selon un deuxième mode de réalisation de l'invention.

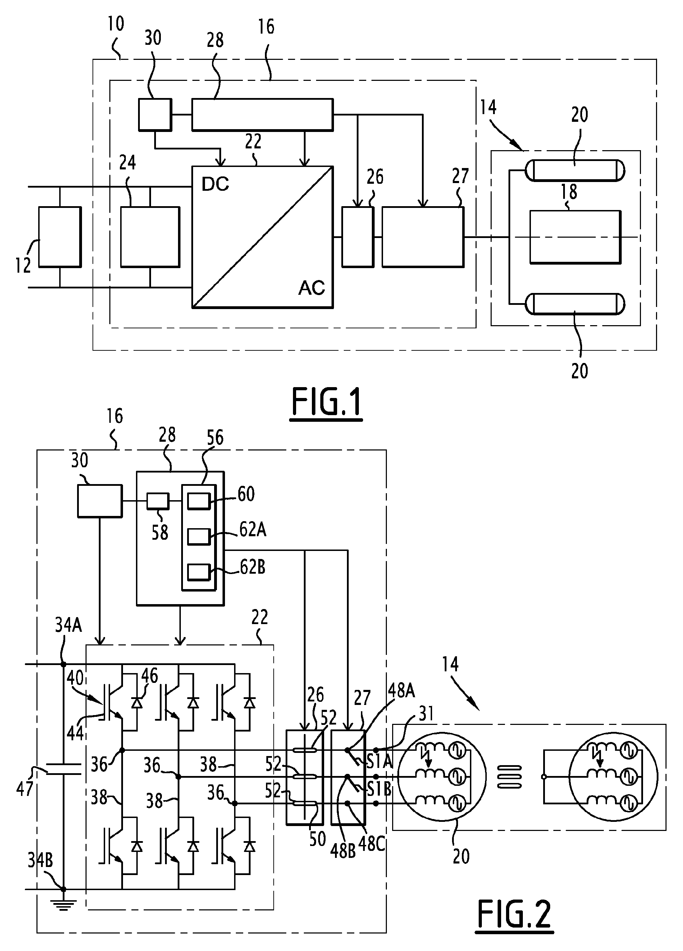

Sur la figure 1, un système de traction électrique 10, installé à bord d'un véhicule ferroviaire, est relié à une source de tension continue 12. La source de tension continue 12 est par exemple une caténaire, reliée à un réseau électrique. La source de tension continue 12 délivre une tension de sortie nominale de valeur supérieure à 600 V, par exemple égale à 3 kV.

Le système de traction électrique 10 comprend une machine électrique 14 synchrone et une chaîne d'alimentation 16 de la machine selon un premier mode de réalisation. La chaîne d'alimentation 16 est reliée à la source de tension continue 12 pour son alimentation.

La machine électrique 14 comporte un rotor 18 et un stator 20. Le rotor 18 comprend des aimants permanents. Le stator 20 comprend des enroulements destinés à être alimentés par la chaîne d'alimentation 16. La machine électrique 14 est, par exemple, un moteur électrique synchrone, polyphasé, à aimants permanents. La machine électrique 14 présente par exemple une puissance nominale comprise entre 50 kW et 2 MW.

La chaîne d'alimentation 16 comprend un convertisseur 22 d'un courant continu d'entrée en un courant alternatif polyphasé de sortie, le convertisseur 22 étant disposé en sortie de la source de tension continue 12. Elle comprend également une banque de stockage 24 disposée entre la source de tension continue 12 et le convertisseur 22, et un dispositif d'isolement 26, disposé en sortie du convertisseur.

La chaîne d'alimentation 16 comprend en outre des moyens de mise en court-circuit 27 des phases de la machine électrique 14, disposés entre le dispositif d'isolement 26 et la machine électrique 14, et des moyens 28 de commande du convertisseur 22, du dispositif d'isolement 26 et des moyens de mise en court-circuit 27. Elle comprend également des moyens de détection 30 d'un court-circuit externe ou interne à la machine électrique. La chaîne d'alimentation 16 présente M sorties d'alimentation 31, M étant un nombre entier.

Le convertisseur 22 comporte une borne positive d'entrée 34A, une borne négative d'entrée 34B, et M bornes de sortie 36. Chaque borne de sortie 36 correspond à une phase respective du courant alternatif polyphasé de sortie propre à être délivré par le convertisseur 22.

Dans l'exemple de réalisation de la figure 2, le nombre M de sorties 31, de bornes de sortie 36 et de phases est égal à trois. Dans ce même exemple de réalisation, le convertisseur 22 est un onduleur triphasé deux niveaux. En variante, le convertisseur 22 est un onduleur trois niveaux. L'onduleur 22 comprend, pour chaque borne de sortie 36 correspondant à une phase respective A, B, C, une branche de commutation 38.

Chaque branche de commutation 38 est connectée entre la première borne d'entrée 34A et la deuxième borne d'entrée 34B. Chaque branche de commutation 38 comprend deux interrupteurs électriques 40 connectés en série et dans le même sens, et reliés entre eux par un point milieu, chaque point milieu formant une borne de sortie 36 correspondant à une phase respective A, B, C du courant de sortie.

Comme connu en soi, chaque interrupteur électrique 40 est un interrupteur bidirectionnel en courant et unidirectionnel en tension. Chaque interrupteur électrique 40 comprend un transistor 44 et une diode 46 connectée en antiparallèle assurant ainsi des trajets de circulation bidirectionnelle de courant lorsque le transistor 44 est passant.

Tous les interrupteurs électriques 40 sont, par exemple, identiques. Le transistor 44 est, par exemple, un transistor bipolaire à grille isolée, également appelé transistor IGBT (de l'anglais Insulated Gate Bipolar Transistor). La grille de chaque transistor 44 est reliée aux moyens de commande 28 pour recevoir un signal de commande correspondant.

En variante, chaque interrupteur électrique 40 comprend un nombre N de transistors 44 connectés en série et dans le même sens, ainsi qu'un nombre N de diodes 46, chaque diode 46 étant connectée en antiparallèle de chaque transistor 44, N étant un nombre entier supérieur ou égal à deux.

La banque de stockage 24 comprend par exemple un condensateur de stockage 47 connecté entre les deux bornes d'entrée 34A, 34B.

Le dispositif d'isolement 26 est propre à isoler la machine électrique 14 de la chaîne d'alimentation 16 en cas de surtension et/ou de surintensité du courant alternatif polyphasé. Dans l'exemple de réalisation, le dispositif d'isolement 26 est un dispositif d'isolement à ampoule sous vide, réalisé conformément à l'enseignement de la demande de brevet déposée sous le numéro FR 2 906 194 le 21 septembre 2006 par la société Alstom Transport S.A.

Le dispositif d'isolement 26 comprend M branches de commutation 50. Dans l'exemple de réalisation de la figure 2, le dispositif d'isolement 26 comporte trois branches de commutation 50. Chaque branche de commutation 50 comporte un interrupteur électrique 52 de sectionnement de la phase correspondante. Chaque interrupteur 52 présente deux états simultanés : un état ouvert et un état fermé, et est relié aux moyens de commande 28 pour recevoir un même signal de commande. Chaque sortie 36 est reliée à un interrupteur électrique 52.

En variante, chaque branche de commutation 50 comporte un nombre P d'interrupteurs électriques 52 de sectionnement connectés en série, P étant un nombre entier supérieur ou égal à deux.

Les moyens de mise en court-circuit 27 sont propres à relier entre elles les M sorties 31, correspondant chacune à une phase de la machine électrique 14. Les moyens de mise en court-circuit sont, dans cet exemple, un contacteur à deux états à coupure classique dans l'air, selon une technologie connue en soi. En variante, les moyens de mise en court-circuit sont un contacteur à deux états à coupure par ampoule sous vide, comme décrit en regard de la figure 2 du document FR 2 906 194. Le contacteur 27 est disposé entre le dispositif d'isolement 26 et les sorties d'alimentation 31.

Le contacteur 27 comporte M bornes de commutation 48. Dans l'exemple de réalisation de la figure 2, le contacteur 27 comporte trois bornes de commutation 48 : une première borne de commutation 48A, une deuxième borne de commutation 48B, et une troisième borne de commutation 48C. Chaque sortie 31 est reliée à une borne de commutation 48A, 48B, 48C du contacteur 27.

Un interrupteur S1A est disposé entre les bornes 48A, 48B, et un interrupteur S1 B est disposé entre les bornes 48B, 48C.

Chaque interrupteur S1A, S1B présente deux états simultanés : un état ouvert et un état fermé.

Dans son état fermé, l'interrupteur S1 A est propre à relier la première borne de commutation 48A à la deuxième borne de commutation 48B, et à ainsi relier les phases A et B de la machine électrique 14. Dans son état ouvert, l'interrupteur S1A est propre à isoler l'un de l'autre les potentiels de sortie des phases A et B de la machine électrique 14.

Dans son état fermé, l'interrupteur S1B est propre à relier la deuxième borne de commutation 48B à la troisième borne de commutation 48C, et à ainsi relier les phases B et C de la machine électrique 14. Dans son état ouvert, l'interrupteur S1B est propre à isoler l'un de l'autre les potentiels de sortie des phases B et C de la machine électrique 14.

Chaque interrupteur S1A, S1B est relié aux moyens de commande 28 pour recevoir un même signal de commande.

En variante, le contacteur 27 est remplacé par tout dispositif de commutation présentant deux positions : une première position propre à isoler les unes des autres les M phases de la machine électrique 14, et une deuxième position propre à relier entre elles les M phases de la machine électrique 14 depuis leur point d'entrée.

Les moyens de commande 28 sont reliés à chacun des interrupteurs électriques 40, S1 A, S1 B, 52, comme indiqué précédemment. Ils sont ainsi propres à envoyer des signaux de commande au convertisseur 22, au dispositif d'isolement 26 et au contacteur 27.

Les moyens de commande 28 comportent un calculateur formé, par exemple, d'une mémoire 56 et d'un processeur de données 58.

La mémoire 56 comprend une loi de commande et un logiciel 60 d'application de signaux de commande.

La loi de commande est propre à calculer des instructions de commande et à transmettre des instructions au logiciel 60. Elle comprend pour cela plusieurs instructions de commande dont une instruction 62A de fermeture de chaque interrupteur S1 A, S1 B, une instruction 62B d'ouverture de chaque interrupteur S1A, S1B, ainsi que des instructions de fermeture ou d'ouverture des interrupteurs 52.

Comme connu en soi, le logiciel 60 est propre à appliquer des instructions de commande issues de la loi de commande. En particulier, l'application de l"instruction 62A permet de commander la fermeture des interrupteurs S1A, S1B lorsqu'un court-circuit interne à la machine électrique 14 survient. L'application de l'instruction 62B permet de commander l'ouverture des interrupteurs S1 A, S1 B, en condition normale d'utilisation du système de traction électrique 10.

Le processeur de données 58 est propre à sélectionner des instructions de commande situées au sein de la loi de commande, en fonction d'un événement déterminé.

En variante, les moyens de commande 28 sont réalisés sous forme de composants logiques programmables, ou encore sous forme de circuits intégrés dédiés.

Les moyens de détection 30 sont reliés aux branches de commutation 38 du convertisseur 22. Ils sont également, par exemple, reliés au calculateur installé au sein des moyens de commande 28.

Les moyens de détection 30 sont propres à détecter un court-circuit externe ou interne à la machine électrique 14 par mesure des courants circulant dans les branches de commutation 38 du convertisseur 22, et/ou par mesure de la température d'air interne du moteur. Pour réaliser ces mesures, les moyens de détection 30 comprennent des capteurs de tension, et/ou des capteurs de températures. Dans le cas d'une détection de température, non représentée sur les figures, les moyens de détection 30 sont reliés à la machine électrique 14.

Ils sont propres à transmettre une information de détection d'un court-circuit au calculateur situé au sein des moyens de commande 28.

Le fonctionnement de la chaîne d'alimentation 16 va désormais être expliqué à l'aide des figures 2 à 5.

Dans la configuration initiale représentée sur la figure 2, les interrupteurs 52 sont fermés, et les interrupteurs S1 A, S1 B sont ouverts. Le convertisseur 22 et la machine électrique 14 sont reliés électriquement via le dispositif d'isolement 26 et le contacteur 27. Un courant alternatif est délivré par le convertisseur 22 au stator 20 de la machine électrique 14 sur chacune de ses phases A, B, C.

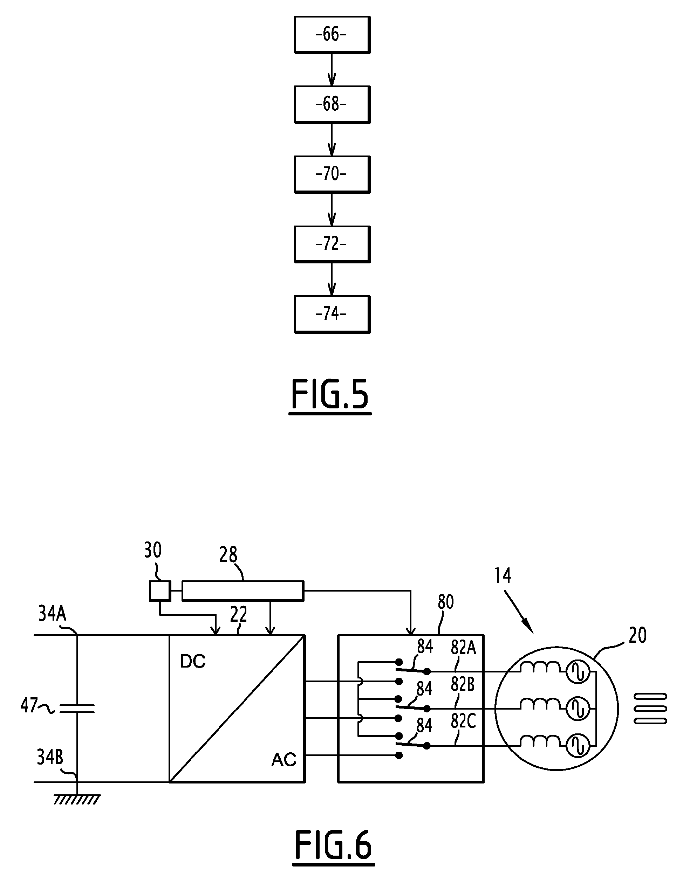

Lorsqu'un défaut électrique interne ou externe à la machine électrique 14, tel qu'un court-circuit par exemple, survient, les moyens de détection 30 détectent à l'étape 66 une surintensité dans les courants circulant dans les branches de commutation 38 du convertisseur 22. L'étape 66 est représentée sur la figure 5.

A l'étape 68 suivante, le processeur 58 sélectionne alors, au sein de la loi de commande, une instruction d'ouverture des interrupteurs 52. Le logiciel 60 exécute cette instruction d'ouverture des interrupteurs 52.

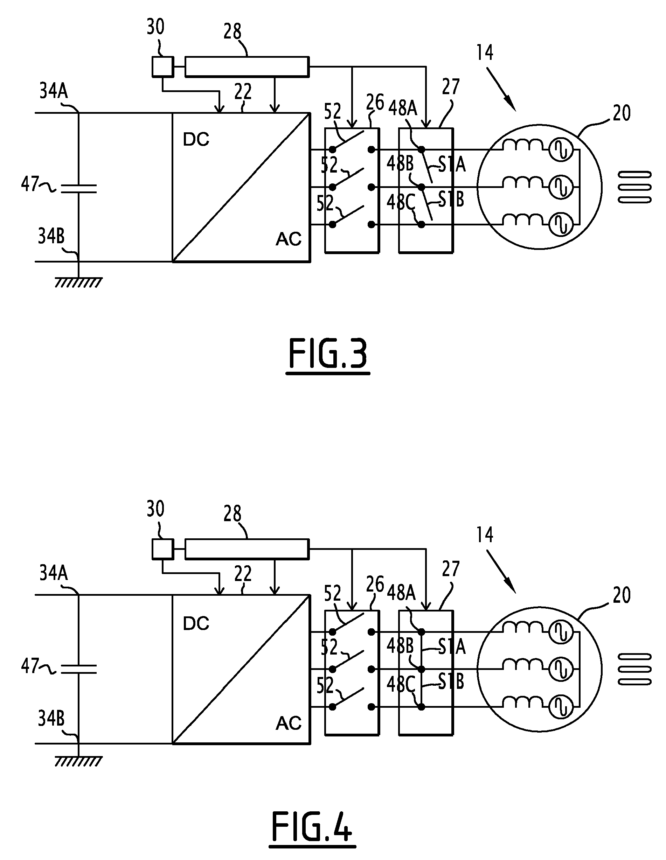

Comme illustré par la figure 3, à l'étape 70, les interrupteurs 52 s'ouvrent, les interrupteurs S1 A, S1 B restant ouverts. La machine électrique 14 est alors électriquement isolée de la chaîne d'alimentation 16.

A l'étape 72 suivante, si le court-circuit est interne à la machine électrique 14, le processeur 58 sélectionne, au sein de la loi de commande, l'instruction 62A de fermeture des interrupteurs S1A, S1 B du contacteur 27. Le logiciel 60 exécute ladite instruction 62A.

Comme illustré par la figure 4, les interrupteurs S1A, S1B se ferment à l'étape 74 suivante, les interrupteurs 52 restant ouverts. L'instruction 62A de fermeture des interrupteurs S1A, S1B du contacteur 27 est maintenue par le logiciel 60 pendant une durée de symétrisation..Les trois phases A, B, C de la machine électrique 14 sont alors court-circuitées. La machine électrique est protégée du défaut électrique et continue à fonctionner pendant toute la durée de symétrisation selon un mode nominal connu en soi. L'étape 74 de symétrisation se termine par la mise à l'arrêt du véhicule ferroviaire et/ou l'intervention d'un opérateur chargé d'assurer la remise en état du système de traction électrique 10. Durant toute la durée de l'étape 74, c'est-à-dire pendant la durée de symétrisation, la machine électrique 14 continue à fonctionner mais passe d'un mode de fonctionnement « moteur » à un mode de fonctionnement « alternateur » dans lequel la machine électrique est entraînée par les roues du véhicule ferroviaire.

En variante, entre l'étape 66 et l'étape 68, les moyens de commande 28 commandent avantageusement la fermeture de moyens de mise en court-circuit 40 connectés à une même borne d'entrée 34A, 34B, selon un procédé de symétrisation connu en soi. Les moyens de mise en court-circuit 40 sont des interrupteurs électriques, par exemple au nombre de trois.

Cette fermeture, par les moyens de commande 28, des interrupteurs 40 connectés à une même borne d'entrée 34A, 34B permet d'une part de faciliter l'ouverture des interrupteurs 52 du dispositif d'isolement 26, et d'autre part de rééquilibrer les courants circulant dans la machine électrique 14.

On conçoit ainsi que, suite à la détection d'un court-circuit interne à la machine électrique 14, ce procédé de commande permet de réduire l'amplitude des couples pulsatoires et des courants de court-circuit dans la machine électrique pendant toute la durée de symétrisation.

Par ailleurs, ce procédé de commande permet de réduire fortement les pertes dans l'onduleur 22, du fait qu'il s'affranchit de toute commande de l'onduleur 22 pour la mise en court-circuit des phases de la machine électrique.

Ce mode de réalisation constitue le mode de réalisation préférentiel de l'invention.

En variante de réalisation, non illustrée, les moyens de détection 30 sont disposés en sortie des moyens de mise en court-circuit 27 et reliés à la machine électrique 14. Les moyens de détection 30 sont également reliés, selon cette variante de réalisation, au calculateur installé au sein des moyens de commande 28, et sont propres à mesurer à tout instant les courants de phase de la machine 14.

Le fonctionnement de la chaîne d'alimentation 16 selon cette variante de réalisation est décrit par les mêmes étapes 66 à 72, correspondant au fonctionnement du mode de réalisation préférentiel. A la différence du mode de réalisation préférentiel, lors de l'étape 74 de symétrisation, les moyens de détection 30 mesurent à tout instant les courants de phase de la machine 14. Tant qu'un déséquilibre existe entre ces courants de phase, l'instruction 62A de fermeture des interrupteurs S1A, S1B du contacteur 27 est maintenue et les trois phases A, B, C de la machine électrique 14 restent court-circuitées. Si les mesures des courants fournies par les moyens de détection 30 indiquent que l'équilibre est rétabli, le processeur 58 sélectionne, lors d'une étape supplémentaire, l'instruction d'ouverture 62B des interrupteurs S1A, S1 B. Le logiciel 60 exécute cette instruction d'ouverture des interrupteurs S1 A, S2B et la chaîne d'alimentation 16 revient dans la configuration illustrée sur la figure 3.

En variante de réalisation encore, non illustrée, les moyens de mise en court-circuit 27 sont disposés entre le convertisseur 22 et le dispositif d'isolement 26. Le dispositif d'isolement 26 est alors relié à la machine électrique 14. Selon cette variante de réalisation, les moyens de mise en court-circuit 27 sont par exemple un contacteur à deux états, ou encore un sectionneur.

Le fonctionnement de la chaîne d'alimentation 16 selon cette variante de réalisation est décrit par les mêmes étapes 66 à 72, correspondant au fonctionnement du mode de réalisation préférentiel. Ces étapes ne sont donc pas décrites à nouveau. A la différence du mode de réalisation préférentiel, lors de l'étape 74 de symétrisation, les interrupteurs 52 ne restent pas ouverts. Plus précisément, après la fermeture des interrupteurs S1 A, S1 B du contacteur 27, le processeur 58 sélectionne, au sein de la loi de commande, une instruction de fermeture des interrupteurs 52. Le logiciel 60 exécute cette instruction de fermeture des interrupteurs 52 et les interrupteurs 52 se ferment.

En variante de réalisation encore, illustrée sur la figure 6, le dispositif d'isolement et les moyens de mise en court-circuit sont localisés dans un même boitier 80. Les moyens de mise en court-circuit 80 sont alors dans cet exemple un contacteur d'isolement à trois états. Le contacteur d'isolement 80 est par exemple un contacteur à ampoule sous vide.

Le contacteur d'isolement 80 comprend M branches de commutation 82, chaque branche de commutation 82 étant connectée entre une borne de sortie 36 du convertisseur 22 et une des M phases du stator 20 de la machine électrique 14.

Dans l'exemple de réalisation de la figure 6, le nombre M de phases est égal à trois. Le contacteur d'isolement 80 comporte trois branches 82 : une première branche 82A, une deuxième branche 82B et une troisième branche 82C.

Chaque branche 82A, 82B, 82C comporte un interrupteur trois états 84.

Chaque interrupteur 84 est propre à commuter, suite à un signal de commande électronique appliqué sur ses bornes, entre un premier état, un deuxième état, et un troisième état. Le premier état, illustré sur la figure 6, correspond à une isolation électrique entre la machine électrique 14 et le convertisseur 22. Le deuxième état correspond à une connexion électrique entre la machine électrique 14 et le convertisseur 22. Le troisième état correspond à une connexion électrique entre les sorties 31 de la chaîne 16.

Les moyens de commande 28 sont reliés à chaque interrupteur 84 du contacteur d'isolement 80 et sont propres à envoyer des signaux de commande audits interrupteurs 84.

Le fonctionnement de la chaîne d'alimentation 16 selon cette variante de réalisation est analogue à celui du mode de réalisation préférentiel, et n'est donc pas décrit à nouveau.

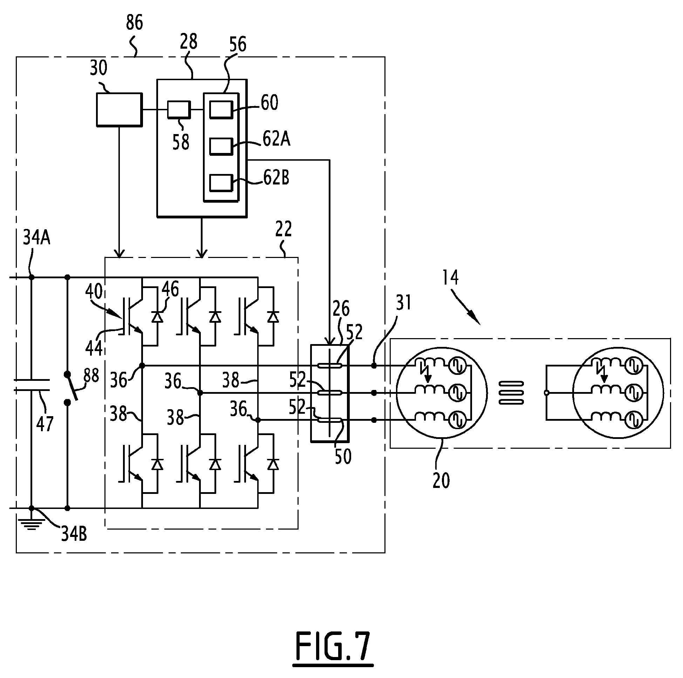

La figure 7 illustre un deuxième mode de réalisation de l'invention, pour lequel les éléments analogues au premier mode de réalisation décrit précédemment sont repérés par des références identiques.

Selon ce deuxième mode de réalisation, le système de traction électrique 10 comprend une machine électrique 14 synchrone et une chaîne d'alimentation 86 de la machine.

La chaine d'alimentation 86 comprend des moyens de mise en court-circuit 88 des phases de la machine électrique 14, disposés entre la banque de stockage 24 et le convertisseur 22. Plus précisément, les moyens de mise en court-circuit 88 sont disposés entre le condensateur 47 et le convertisseur 22.

Les moyens de mise en court-circuit 88 sont, dans cet exemple, un interrupteur. L'interrupteur 88 est connecté en parallèle du condensateur 47, entre les deux bornes d'entrée 34A, 34B.

La loi de commande comprend une instruction 90A de fermeture de l'interrupteur 88, et une instruction 90B d'ouverture de l'interrupteur 88.

Le fonctionnement de la chaîne d'alimentation 86 selon le deuxième mode de réalisation de l'invention va désormais être expliqué.

Dans une configuration initiale, les interrupteurs 52 sont fermés, et l'interrupteur 88 est ouvert. Le convertisseur 22 et la machine électrique 14 sont reliés électriquement via le dispositif d'isolement 26. Un courant alternatif est délivré par le convertisseur 22 au stator 20 de la machine électrique 14 sur chacune de ses phases A, B, C.

Lorsqu'un court-circuit interne ou externe à la machine électrique 14 survient, les moyens de détection 30 détectent lors d'une étape une surintensité dans les courants circulant dans les branches de commutation 38 du convertisseur 22.

Lors d'une étape suivante, si le court-circuit est interne à la machine électrique 14, les moyens de commande 28 commandent l'ouverture des six interrupteurs électriques 40 du convertisseur 22. Le processeur 58 sélectionne ensuite, au sein de la loi de commande, l'instruction 90A de fermeture de l'interrupteur 88. Le logiciel 60 exécute ladite instruction 90A.

L'interrupteur 88 se ferme alors lors d'une étape suivante, les interrupteurs 52 restant fermés. L'instruction 90A de fermeture de l'interrupteur 88 est maintenue par le logiciel 60 pendant la durée de symétrisation.

On conçoit ainsi que la chaîne d'alimentation selon l'invention permet de réduire l'amplitude des couples pulsatoires et des courants de court-circuit engendrés au sein de la machine électrique, lors de l'apparition d'un court-circuit interne à la machine électrique, et d'éviter ainsi l'apparition d'un phénomène indésirable.

## Revendications

1. Chaîne d'alimentation (16; 86) ayant M sorties d'alimentation (31) pour l'alimentation d'une machine électrique (14) synchrone à M phases, la chaîne (16) comprenant :
- un convertisseur (22) d'un courant continu d'entrée en un courant alternatif polyphasé de sortie comportant une pluralité M de phases, le convertisseur (22) comprenant deux bornes d'entrée (34A, 34B) M bornes de sortie (36) et M branches de commutation (38), et étant propre à délivrer à ladite machine électrique (14) le courant alternatif polyphasé,
- au moins un condensateur de stockage (47) disposé entre les bornes d'entrée du convertisseur (22),
- des moyens de détection (30) propres à détecter un court-circuit, externe ou interne à la machine électrique, par mesure des courants circulant dans les branches de commutation (38) du convertisseur (22),
- un dispositif d'isolement (26) de la machine électrique (14) contre les surtensions et/ou les surintensités dudit courant alternatif polyphasé, le dispositif d'isolement (26) étant disposé entre le convertisseur (22) et les M sorties d'alimentation (31), et comportant une pluralité M de branches (50), chaque branche (50) comportant au moins un interrupteur électrique (52) de sectionnement de la phase considérée, disposé entre le convertisseur (22) et l'une des M sorties (31), et
- des moyens de commande (28) du convertisseur (22) et du dispositif d'isolement (26), les moyens de commande étant propres à ouvrir le dispositif d'isolement lors de la détection d'un court-circuit par les moyens de détection,
**caractérisée en ce que** les moyens de détection (30) sont propres, en outre, à déterminer si un court-circuit détecté est un court-circuit interne à la machine électrique (14), par des capteurs de température pour mesurer une température d'air interne à la machine électrique, et **en ce que** la chaîne d'alimentation (16 ; 86) comporte en outre des moyens de mise en court-circuit (27, 40, 80 ; 88) propres à relier entre elles les M sorties d'alimentation (31) lors de la détermination d'un court-circuit interne, les moyens de commande (28) étant propres à commander les moyens de mise en court-circuit (27, 40, 80 ; 88) pour la réalisation de cette opération.

2. Chaîne d'alimentation (16) selon la revendication 1, **caractérisée en ce que** les moyens de mise en court-circuit (27, 80) sont disposés entre le convertisseur (22) et les M sorties d'alimentation (31).

3. Chaîne d'alimentation (16) selon la revendication 1 ou 2, **caractérisée en ce que** les moyens de mise en court-circuit (80) comportent M interrupteurs électroniques (84), et **en ce que** chaque interrupteur (84) présente trois états de commutation possibles.

4. Chaîne d'alimentation (86) selon la revendication 1, **caractérisée en ce que** les moyens de mise en court-circuit (88) sont disposés entre ledit au moins un condensateur de stockage (47) et le convertisseur (22).

5. Chaîne d'alimentation (16; 86) selon l'une quelconque des revendications précédentes, **caractérisée en ce que** les moyens de commande (28) et les moyens de détection (30) partagent un même calculateur situé au sein des moyens de commande (28).

6. Chaîne d'alimentation (16; 86) selon l'une quelconque des revendications précédentes, **caractérisée en ce que** le nombre M de phases est égal à trois.

7. Système de traction électrique (10) comprenant une machine électrique (14) synchrone et une chaîne d'alimentation (16; 86) de la machine électrique (14), **caractérisé en ce que** la chaîne d'alimentation (16 ; 86) est conforme à l'une quelconque des revendications précédentes, et est propre à alimenter un stator (20) de la machine électrique (14), le stator (20) étant connecté en sortie de la chaîne d'alimentation (16 ; 86).

8. Procédé de commande d'une chaîne d'alimentation (16 ; 86) selon l'une des revendications 1 à 6, comprenant une étape (66) de détection d'un court-circuit externe ou interne à la machine électrique (14) par mesure des courants circulant dans les branches de commutation (38) du convertisseur (22) et, en cas de détection d'un court-circuit, une étape (70) d'ouverture du dispositif d'isolement (26), **caractérisé en ce qu'**il comprend, en outre, une étape (72) de détermination si un court-circuit détecté est un court-circuit interne à la machine électrique (14) par mesure de la température d'air interne à la machine électrique par les capteurs de température et, en cas de détermination d'un court-circuit interne à la machine électrique (14), une étape (74) de mise en court-circuit par les moyens de mise en court-circuit (27, 80 ; 88) des M phases de la machine électrique (14), par connexion électrique entre les M sorties d'alimentation (31) de la chaîne (16 ; 86).

## Patentansprüche

1. Versorgungskette (16; 86), aufweisend M Versorgungsausgänge (31) zur Versorgung einer elektrischen, M-phasigen Synchronmaschine (14), wobei die Kette (16) aufweist:
- einen Wandler (22) eines Eingangsgleichstroms in einen Ausgangsmehrphasenwechselstrom, welcher eine Mehrzahl M von Phasen aufweist, wobei der Wandler (22) zwei Eingangsanschlüsse (34A, 43B), M Ausgangsanschlüsse (36) und M Schaltzweige (38) aufweist und dazu geeignet ist, der elektrischen Maschine (14) den Mehrphasenwechselstrom zuzuführen,
- wenigstens einen Speicherkondensator (47), welcher zwischen den Eingangsanschlüssen des Wandlers (22) angeordnet ist,
Mittel zur Detektion (30), welche dazu geeignet sind, einen Kurzschluss außerhalb oder innerhalb der elektrischen Maschine zu detektieren durch Messen der in den Schaltzweigen (38) des Wandlers (22) fließenden Ströme,
- eine Vorrichtung zur Isolation (26) der elektrischen Maschine (14) gegen die Überspannungen und/oder die Überströme des Mehrphasenwechselstroms, wobei die Vorrichtung zur Isolation (26) zwischen dem Wandler (22) und den M Versorgungsausgängen (31) angeordnet ist und aufweist eine Mehrzahl M von Zweigen (50), wobei jeder Zweig (50) wenigstens einen elektrischen Schalter (52) zur Trennung der berücksichtigten Phase aufweist, welcher zwischen dem Wandler (22) und einem der M Ausgänge (31) angeordnet ist, und
- Mittel zum Steuern (28) des Wandlers (22) und der Vorrichtung zur Isolation (26), wobei die Mittel zum Steuern dazu geeignet sind, die Vorrichtung zur Isolation (26) bei der Detektion, durch die Mittel zur Detektion, eines Kurzschlusses zu öffnen,
**gekennzeichnet dadurch, dass** die Mittel zur Detektion (30) ferner dazu geeignet sind, mittels der Temperatursensoren zum Messen einer Temperatur der Luft innerhalb der elektrischen Maschine zu ermitteln, ob ein detektierter Kurzschluss ein Kurzschluss innerhalb der elektrischen Maschine (14) ist, und dadurch, dass die Versorgungskette (16; 86) ferner Mittel zum Kurzschließen (27, 40, 80; 88) aufweist, welche dazu geeignet sind, bei der Ermittlung eines inneren Kurzschlusses die M Versorgungsausgänge (31) untereinander zu verbinden, wobei die Mittel zum Steuern (28) dazu geeignet sind, die Mittel zum Kurzschließen (27, 40, 80; 88) zur Realisierung dieses Betriebs zu steuern.

2. Versorgungskette (16) gemäß dem Anspruch 1, **gekennzeichnet dadurch, dass** die Mittel zum Kurzschließen (27, 80) zwischen dem Wandler (22) und den M Versorgungsausgängen (31) angeordnet sind.

3. Versorgungskette (16) gemäß dem Anspruch 1 oder 2, **gekennzeichnet dadurch, dass** die Mittel zum Kurzschließen (80) M elektronische Schalter (84) aufweisen, und dadurch, dass jeder Schalter (84) drei mögliche Schaltzustände aufweist.

4. Versorgungskette (86) gemäß dem Anspruch 1, **gekennzeichnet dadurch, dass** die Mittel zum Kurzschließen (88) zwischen dem wenigstens einem Speicherkondensator (47) und dem Wandler (22) angeordnet sind.

5. Versorgungskette (16; 86) gemäß irgendeinem der vorhergehenden Ansprüche, **gekennzeichnet dadurch, dass** die Mittel zum Steuern (28) und die Mittel zur Detektion (30) gemeinsam einen gleichen Rechner nutzen, welcher sich innerhalb der Mittel zum Steuern (28) befindet.

6. Versorgungskette (16; 86) gemäß irgendeinem der vorhergehenden Ansprüche, **gekennzeichnet dadurch, dass** die Anzahl M der Phasen gleich drei ist.

7. Elektrisches Antriebssystem (10), welches eine elektrische Synchronmaschine (14) und eine Versorgungskette (16; 86) der elektrischen Maschine (14) aufweist, **dadurch gekennzeichnet, dass** die Versorgungskette (16; 86) irgendeinem der vorhergehenden Ansprüche entspricht und dazu geeignet ist, einen Stator (20) der elektrischen Maschine (14) zu versorgen, wobei der Stator (20) mit dem Ausgang der Versorgungskette (16; 86) verbunden ist.

8. Verfahren des Steuerns einer Versorgungskette (16; 86) gemäß einem der Ansprüche 1 bis 6, aufweisend einen Schritt (66) der Detektion eines Kurzschlusses außerhalb oder innerhalb der elektrischen Maschine (14) durch Messen der zwischen den Schaltzweigen (38) des Wandlers (22) fließenden Ströme, und, im Fall der Detektion eines Kurzschlusses, einen Schritt (70) der Öffnung der Vorrichtung zur Isolation (26), **gekennzeichnet dadurch, dass** es ferner aufweist einen Schritt (72) des Ermittelns, ob ein detektierter Kurzschluss ein Kurzschluss innerhalb der elektrischen Maschine (14) ist, durch Messen der Temperatur der Luft innerhalb der elektrischen Maschine mittels der Temperatursensoren, und, im Fall der Ermittlung eines Kurzschlusses innerhalb der elektrischen Maschine (14), einen Schritt (74) des Kurzschließens mittels der Mittel zum Kurzschließen (27, 80; 88) der M Phasen der elektrischen Maschine (14) durch eine elektrische Verbindung zwischen den M Versorgungsausgängen (31) der Kette (16; 86).

## Claims

1. A feed chain (16; 86) having M feed outputs (31) for supplying a synchronous electric machine (14) with M phases, the chain (16) comprising:
- a converter (22) for converting a direct input current into a polyphase alternating output current including a plurality M of phases, the converter (22) comprising two input terminals (34A, 34B), M output terminals (36) and M commutation branches (38), and capable of delivering the polyphase alternating current to said electric machine (14),
- at least one storage capacitor (47) arranged between the input terminals of the converter (22),
- a detection means (30) for detecting a short-circuit, internal or external to the electric machine, by measuring the currents circulating in the connection branches (38) of the converter (22),
- an insulating device (26) for insulating the electric machine (14) from overvoltages and/or overcurrents of the polyphase alternating current, the insulating device (26) being arranged between the converter (22) and the M feed outputs (31), and including a plurality M of branches (50), each branch (50) including at least one electric switch (52) for disconnecting the considered phase, arranged between the converter (22) and one of the M outputs (31), and
- control means (28) for controlling the converter (22) and the insulating device (26), the control means being capable of opening the insulating device when a short-circuit is detected by the detection means,
**characterised in that** the detection means (30) are further capable of determine whether a detected short-circuit is a short-circuit internal to the electric machine (14), by way of temperature sensors for measuring the air temperature inside the electric machine, and **in that** the feed chain (16; 86) also comprises short-circuiting means (27,40, 80; 88) capable to connect together the M feed outputs (31) when an internal short-circuit has been determined, the control means (28) being capable to command the short-circuit means (27,40, 80; 88) to realise this step.

2. The feed chain (16) according to claim 1, **characterised in that** the short-circuiting means (27, 80) are arranged between the converter (22) and the M power supply outputs (31).

3. The feed chain (16) according to claim 1 or claim 2, **characterised in that** the short-circuiting means (80) include M electronic switches (84), and **in that** each switch (84) has three possible switching states.

4. The feed chain according to claim 1, **characterised in that** the short-circuiting means (88) are arranged between the storage capacitor ( 47) and the converter (22).

5. The feed chain (16; 86) according to any one of the previous claims, **characterised in that** the control means (28) and the detection means (30) share a same computer situated within the control means (28).

6. The feed chain (16; 86) according to any one of the previous claims, **characterised in that** the number M of phases is equal to three.

7. An electric traction system (10) comprising a synchronous electric machine (14) and a feed chain (16; 86) of the electric machine (14), **characterised in that** the feed chain (16; 86) is according to anyone of the previous claims, and is capable of feeding a stator (20) of the electric machine (14), the stator (12) being connected as output to the feed chain (16; 86).

8. A method for controlling a feed chain (16; 86) according to anyone of the claims 1 to 6, comprising a step (66) for detecting a short-circuit outside or inside the electric machine (14) by measuring the courants circulating in the commutation branches (38) of the converter (22) and, when a short-circuit is detected, a step (70) of opening the insulating device (26), **characterised in that** it further comprises a step (72) for determining whether the detected short-circuit is a short-circuit internal to the electric machine (14) by measuring the temperature of the air inside the electric machine by way of temperature sensors, and, when a short-circuit internal to the electric machine (14) is determined, a step (71) for short-circuiting by the short-circuit means (27, 80; 88) of the M phases of the electric machine (14), by the electric connection of the M feed outputs (31) of the feed chain (16; 86).
